# EUROPEAN PATENT APPLICATION

(11) **EP 0 570 134 A2**
(43) Date of publication of application: **18.11.1993**
(21) Application number: 93303379.7
(22) Date of filing: 29.04.1993
(51) Int. Cl.: G11B 15/675, G11B 25/06, G11B 15/17, G11B 15/26

(54) **Cassette loading apparatus**

(30) Priority: 06.05.1992 JP 113450/92
(71) Applicant: MATSUSHITA ELECTRIC INDUSTRIAL CO., LTD., Kadoma-shi, Osaka-fu, 571 (JP)
(72) Inventor: Hino, Masayuki, Yodogawa-ku, Osaka-shi, Osaka-fu, 532 (JP); Hayashi, Takayuki, Hirakata-shi, Osaka-fu, 573 (JP)
(74) Representative: Crawford, Andrew Birkby

(57) **Abstract**

A cassette loading apparatus has an inner cassette holder (1) for selectively holding any of different size cassettes, and an outer cassette holder (5) for holding the inner cassette movably in cassette inserting and discharging directions. The outer cassette holder is movable between a cassette insertable and removable position and a specific cassette loading position. The inner cassette holder has a contact member adapted to come in contact with a specific size cassette inserted thereinto. The apparatus has a protrusion member which is adapted to come in contact with the contact member held in the inner cassette holder at a predetermined position of the outer cassette holder on its way of movement in the cassette discharging direction to prevent a movement of the inner cassette holder in the cassette discharging direction to thereby control the projection amount of the cassette from the front panel of the apparatus.

## Description

### BACKGROUND OF THE INVENTION

### 1. Field of the Invention

The present invention relates to a cassette loading apparatus for loading and unloading a cassette containing therein a recording medium such as a recording tape used in a signal recording/reproducing apparatus such as a video tape recorder (VTR) or the like.

### 2. Description of the Prior Art

VTRs permitting selective use of various kinds of cassette of different sizes have recently been developed for broadcasting VTRs.

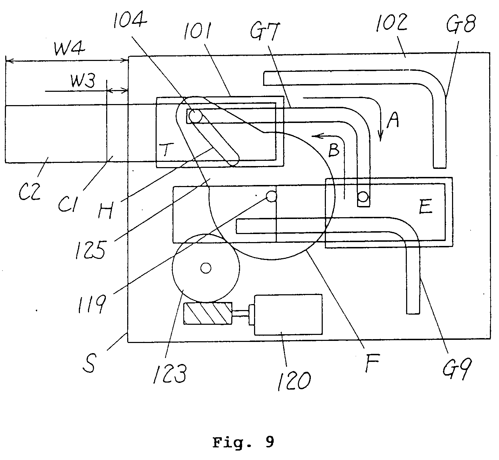

The construction of a conventional cassette loading apparatus permitting the use of two kinds of cassette, C1 and C2, will be described below with reference to Fig. 9. Fig. 9 is a side view illustrating a conventional commercial cassette loading apparatus used in MII-format VTRs, indicating a waiting position T and a prescribed loading position E for cassettes C1 and C2.

As shown in Fig. 9, a typical cassette loading apparatus for a VTR or the like comprises a cassette holder 101 for holding cassette C1 or C2, guide plates 102 which guide insertion of the cassette holder 101 on both sides, and a cassette holder moving mechanism. The cassette holder moving mechanism comprises a motor 120, a gear 123 and a loading arm 125. Guide rollers 104 are provided on both sides of the cassette holder 101. The guide rollers 104 guide and support the movement of the cassette holder 101 along guide grooves G7, G8 and G9 provided in the guide plates 102. A rotary shaft 119 is attached to the guide plates 102 to allow the engagement of the gear portion F of the loading arm 125 and the gear 123. A long hole H is formed in the loading arm 125 and engages with the guide rollers 104.

The operation of the cassette loading apparatus having the construction described above, will be described below. If a cassette, C1 or C2, is inserted into the cassette holder 101 when the cassette holder 101 is at the waiting, or insertable and removable, position T, a sensor (not shown) detects that a cassette has been properly held and the motor 120 begins rotation. The rotation of the motor 120 is transmitted to the gear 123 to cause rotation of the loading arm 125. The long hole H of the loading arm 125 engages with the guide rollers 104 on the cassette holder 101, and carries the cassette holder 101 along the guide grooves of the guide plates 102 in the direction of arrow A. When the cassette holder 101 has been carried to position E, a sensor (not shown) detects the position of the cassette holder 101 and therefore causes rotation of the motor 120 to cease.

Pressing an eject button (not shown) when the cassette holder 101 is at position E causes the reverse rotation of the motor 120, so that the loading arm 125 carries the cassette holder 101 in the direction of arrow B. When the cassette holder 101 has been carried to position T, the sensor causes rotation of the motor 120 to cease. At this moment, the amount of projection of cassettes C1 and C2 from the front panel varies with the size of the cassette: W3 for a small cassette C1, and W4 for a large cassette C2.

In the construction of the conventional cassette loading apparatus, the amount of projection of the cassette from the front panel upon ejecting the cassette varies with the kind of the cassette. Setting the waiting position T of the cassette holder 101 so as to ensure a sufficient amount of projection of the cassette from the front panel for the small cassette C1 results in an excessive amount of projection for the large cassette C2 so that cassette C2 becomes unstable. Setting the waiting position T of the cassette holder to achieve the amount of projection needed for the large cassette C2 makes it impossible to ensure a sufficient amount of projection for the small cassette, making it difficult to take out the cassette.

In contrast, there is a cassette loading apparatus which permits selective use of cassettes of different sizes and gives approximately constant amount of projection of the cassette upon ejection (Japanese Laid-open Patent Application No. 60-76049). This apparatus ensures a proper amount of projection of any size cassette by providing a mechanism for moving the cassette in the insertion/discharge direction in the cassette holder. It is however necessary to provide an engagement hole on the cassette to engage with the cassette moving mechanism.

There is also another cassette loading apparatus which permits selective use of cassettes of different sizes and gives very similar amounts of projection of the cassette upon ejection (Japanese Laid-open Patent Application No. 2-223052). This apparatus has a double-structured cassette holder in which an inner cassette holder and an outer cassette holder are independently movable. To achieve approximately constant amount of projection of cassettes of different sizes, movement of the outer cassette holder in the ejecting direction stops half-way when a large cassette is selected. This however requires two motors for driving the outer cassette holder and the inner cassette holder and many sensors for controlling operations, resulting in a complicated structure with the necessity of many parts.

### SUMMARY OF THE INVENTION

An object of the present invention is therefore to provide a cassette loading apparatus which permits selective loading of various kinds of cassettes having different sizes from one another and has a high operability by giving approximately constant projection amount of a cassette from a front panel of the apparatus upon ejection irrespective of the size of the selected cassette.

To achieve this object, a cassette loading apparatus of the present invention has an inner cassette holder for selectively holding any of a plurality of kinds of cassettes having different sizes from each other, and an outer cassette holder for holding the inner cassette movably in cassette inserting and discharging directions. The outer cassette holder is movable between a first position where a cassette is insertable into and removable from the inner cassette holder and a second position where a cassette held in the inner cassette holder is in a specific loading position. The inner cassette holder has a contact member which is adapted to come in contact with a specific one of the plurality of kinds of cassettes inserted thereinto. The apparatus has a protrusion member which is adapted to come in contact with the contact member held in the inner cassette holder at a predetermined position of the outer cassette holder on its way of movement in the cassette discharging direction from the second position to the first position to prevent a movement of the inner cassette holder in the cassette discharging direction to thereby control the projection amount of the cassette from the front panel of the apparatus.

In the case of selectively using two different size cassettes, the contact member may be adapted to come in contact with a larger one of the two cassettes and the protrusion member so as to prevent movement of the inner cassette in the cassette discharging direction at a predetermined position during ejection. In the case of using three or more different size cassettes, the inner cassette holder may be provided with a plurality of contact members each being adapted to come in contact with a corresponding one of the cassettes except for a smallest cassette, and a plurality of protrusion members each being adapted to come in contact with a corresponding one of the plurality of contact members. In this case, to selectively use n kinds of different size cassettes, at least (n-1) contact members may be provided.

### BRIEF DESCRIPTION OF THE DRAWINGS

Fig. 1 is a plan view illustrating a cassette loading apparatus of a first embodiment of the present invention.

Fig. 2 is a side view of the cassette loading apparatus of the first embodiment of the present invention.

Fig. 3 is a side view of the cassette loading apparatus of the first embodiment of the present invention as viewed from the opposite side to Fig. 2.

Fig. 4 is a configurational view illustrating the projection amount of the cassette in the cassette loading apparatus of the first embodiment of the present invention.

Fig. 5 is a sectional view illustrating the operation of the contact arm of the cassette loading apparatus of the first embodiment of the present invention.

Fig. 6 is another sectional view illustrating the operation of the contact arm of the cassette loading apparatus of the first embodiment of the present invention;

Fig. 7 is a plan view of a cassette loading apparatus of a second embodiment of the present invention;

Fig. 8 is a side view of the cassette loading apparatus of the second embodiment of the present invention; and

Fig. 9 is a side view of a conventional cassette loading apparatus.

### DESCRIPTION OF THE PREFERRED EMBODIMENTS

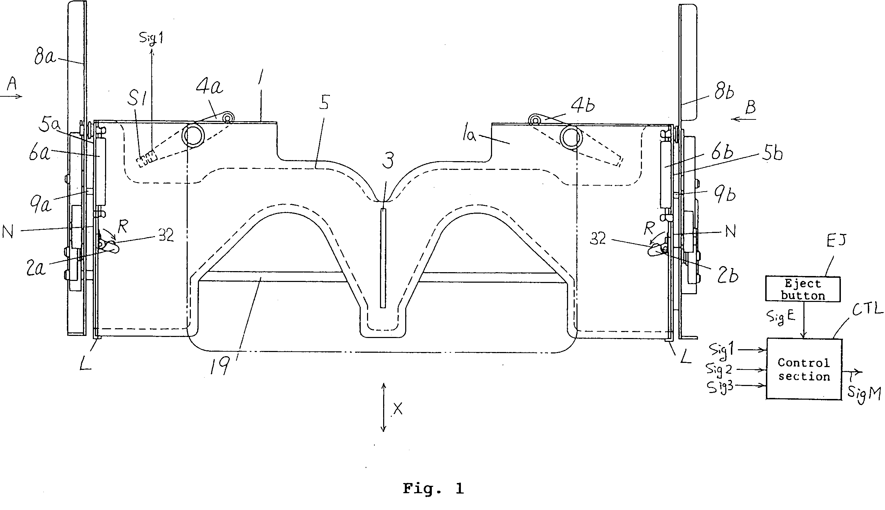

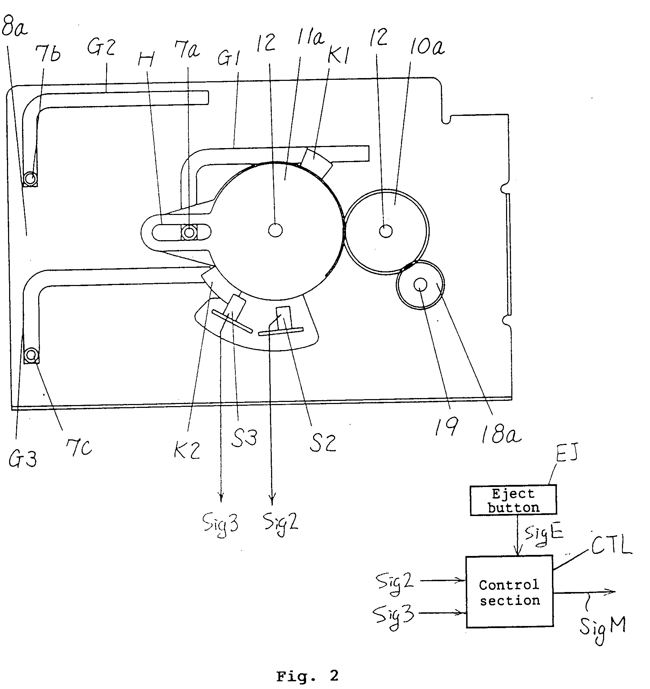

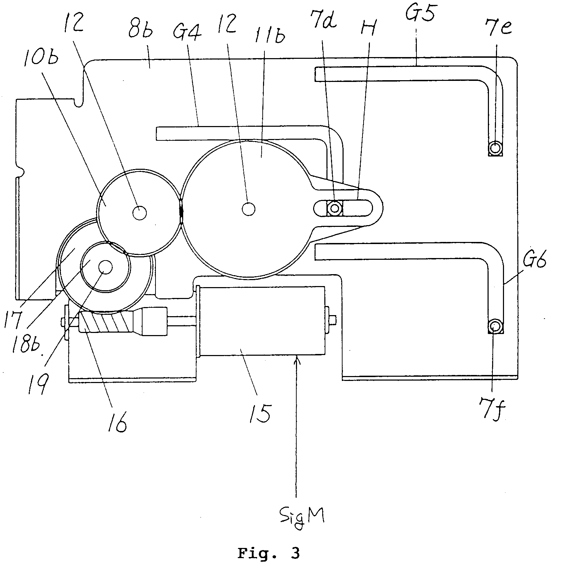

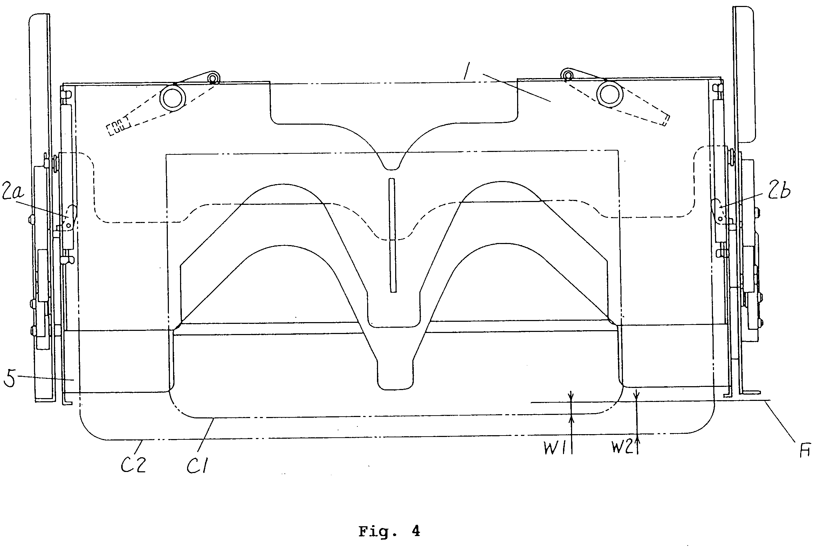

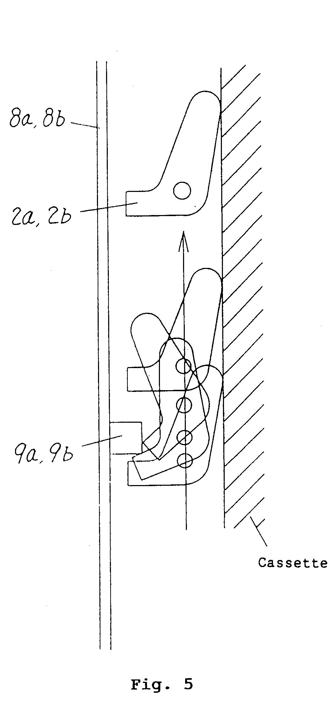

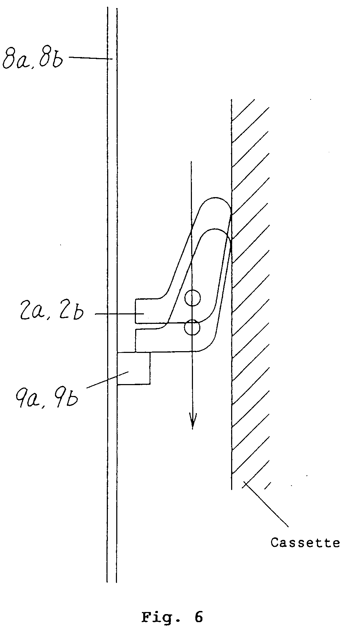

A first embodiment of the present invention permitting selective use of two cassettes having different sizes from each other will be described below with reference to Figs. 1 to 6. Here, each cassette is a magnetic tape cassette, which encases therein a magnetic tape wound on a pair of reels, for VTR. Fig. 1 is a plan view illustrating a cassette loading apparatus of the first embodiment of the present invention, and Figs. 2 and 3 are opposite side views from A and B of the same. Fig. 4 is a configurational view illustrating the projection amount of each cassette upon ejection in the cassette loading apparatus of the first embodiment. Figs. 5 and 6 are functional views illustrating. operations in the first embodiment of the present invention.

The configuration of the first embodiment will be described below with reference to Figs. 1 to 3.

As shown in Fig. 1, a pair of turnable contact arms 2a and 2b are provided on an inner wall of each side plate of an inner cassette holder 1. The contact arms 2a and 2b are urged by a spring 32 in the direction of arrow R. The initial position of each of the contact arms 2a and 2b when a cassette is not inserted is as shown in Fig. 1. A cassette insertion guide member 3 is provided at the center of the inner cassette holder 1. The cassette insertion guide member 3 guides insertion of the cassette so as to permit proper positioning of either one of the cassettes of different sizes in the inner cassette holder 1. Turnable cassette insertion detection levers 4a and 4b for confirming the proper insertion of the cassette in the inner cassette holder 1 and an light shuttering type cassette insertion detecting sensor S1 are provided on a bottom plate 1a of the inner cassette holder 1. The cassette insertion detecting sensor S1 sends a signal Sig1 indicating a turn position of the cassette insertion detection levers 4a and 4b to a control section CTL.

An outer cassette holder 5 holds therein the inner cassette holder 1 movably in the cassette inserting and discharging directions X. The inner cassette holder 1 and the outer cassette holder 5 pull against each other by means of the tensile force of springs 6a and 6b. The inner cassette holder 1 is held at a specific position as shown in Fig. 1 by a stopper L of the outer cassette holder 5. Guide rollers 7a to 7f are fixed to both side plates 5a and 5b of the outer cassette holder 5. Each of the side plates 5a and 5b is provided with a rectangular window N so as not to prevent turning motion of the contact arms 2a and 2b.

Guide plates 8a and 8b having guide grooves G1 to G6 are arranged on both sides of the outer cassette holder 5. The outer cassette holder 5 and the inner cassette holder 1 are guided by the movement of the guide rollers 7a to 7f travelling along the guide grooves G1 to G6. Protrusion members 9a and 9b for preventing movement of the inner cassette holder 1 by abutting the contact arms 2a and 2b are fixed to the guide plates 8a and 8b. Also, idler gears 10a and 10b, loading arms 11a and 11b each having an arm portion and a rotating shaft 12 are mounted on the guide plates 8a and 8b. Light shuttering type position detecting sensors S2 and S3 for detecting the position of the outer cassette holder 5 are provided on the guide plate 8a. The position detecting sensors S2 and S3 send signals Sig2 and Sig3 indicating the position of the outer cassette holder 5 to the control section CTL.

The mechanism for moving the outer cassette holder 5 comprises a motor 15, a worm 16, a worm wheel 17, idler gears 10a and 10b, gears 18a and 18b, a synchronizing shaft 19 and loading arms 11a and 11b. The gears 18a and 18b are connected by the shaft 19 to rotate synchronously with each other. The synchronizing shaft 19 transmits the rotary force of the gear 18b which is integral with the worm wheel 17 to the gear 18a. A long hole H is formed in the arm portion of each of the loading arms 11a and 11b to cause engagement with the guide rollers 7a to 7f. Shutter plates K1 and K2 for cutting off the transmission light beams of the position detecting sensors S2 and S3 are provided on the outer periphery of the loading arm 11a.

Operations of the first embodiment of the present invention having the construction as described above will be described with reference to Figs. 1 to 6.

First, the description will cover operations in the case a small cassette (C1) (smaller one of the two different size cassettes) is used. The outer cassette holder 5 is in a waiting state at the waiting position as shown in Fig. 1 when the cassette C1 is not inserted into the inner cassette holder 1. The inner cassette holder 1 is held in specific position relative to the outer cassette holder 5 as shown in Fig. 1.

When the cassette C1 is inserted in this state, the cassette C1 is guided by the cassette insertion guide member 3 and inserted into the inner cassette holder 1 without coming into contact with the contact arms 2a and 2b. When the cassette C1 is properly inserted into the inner cassette holder 1, the cassette insertion detection levers 4a and 4b rotate, and the cassette insertion detecting sensor S1 sends an insertion detection signal Sig1 to the control section CTL. The control section CTL sends, in response to the signal Sigl, a signal SigM to the motor 15 to start rotation of the motor 15. When rotation of the motor 15 is started, the resultant rotation of the loading arms 11a and 11b causes the outer cassette holder 5 to start travelling to the cassette loading position. As the outer cassette holder 5 moves, the contact arms 2a and 2b arranged on the inner cassette holder 1 and the protrusion members 9a and 9b provided on the guide plates 8a and 8b pass close to each other but do not come into contact with each other to allow passage of the outer cassette holder 5.

When the outer cassette holder 5 has moved the cassette C1 to the cassette loading position, the shutter plate K2 provided on the loading arm 11a cuts off the transmission light beam of the position detecting sensor S3 and sends a cassette loading detection signal Sig3 to the control section CTL. The control section CTL sends, in response to the signal Sig3, a signal SigM to the motor 15 to discontinue rotation of the motor 15 and stop the travel of the outer cassette holder 5. Here, the cassette loading position is a position where the VTR can draw the magnetic tape out of the cassette and drive the reels for signal recording or reproduction.

When an eject button EJ is pressed in this state, a signal SigE is sent to the control section CTL. The control section CTL sends, in response to the signal SigE, a signal SigM to the motor 15 to start rotation in the reverse direction, causing the outer cassette holder 5 to travel in the cassette discharging direction. During the travel of the outer cassette holder 5, the contact arms 2a and 2b and the protrusion members 9a and 9b pass close to each other, but passage is allowed without contact between them. When the outer cassette holder 5 travels to the cassette discharge position, or the waiting position, the shutter plate K1 cuts off the transmission light beam of the position detecting sensor S2, and sends a detection signal Sig2 to the control section CTL to discontinue rotation of the motor 15 by means of the signal SigM from the control section CTL.

As a result of these operations, the projection amount of the cassette C1 from the front panel F is W1.

Now, operations when using a large cassette C2 will be described below with reference to Figs. 4 to 6. The cassette C2, when inserted, is guided by the cassette insertion guide member 3 so as to come into contact with the two contact arms 2a and 2b located on the inner cassette holder 1. When the cassette is further inserted, the contact arms 2a and 2b, in contact with the side surfaces of the cassette C2, turn about their respective rotary shafts from their initial positions and are held in a specific turned positions. In this state, the inner cassette holder 1 is held at the specific position relative to the outer cassette holder 5.

When the cassette C2 is further pushed in and properly inserted into the inner cassette holder 1, the inner cassette holder 1 and the outer cassette holder 5 travel as an integral unit toward the cassette loading position. As travel of the outer cassette holder 5 continues, the contact arms 2a and 2b arranged on the inner cassette holder 1 come into contact with the protrusion members 9a and 9b provided on the guide plates 8a and 8b. The contact arms 2a and 2b pass over the protrusion members 9a and 9b while turning in the manner as shown in Fig. 5, and after passing the protrusion members 9a and 9b, they return to their specific turned position by the action of the springs 32. The outer cassette holder 5 continues moving to the cassette loading position and stops there.

When the eject button EJ is pressed in this state, the motor 15 is rotated in the reverse direction via the control section CTL, thus starting reverse travel of the outer cassette holder 5 toward the. cassette discharge position. During this travel, the contact arms 2a and 2b which have been rotated by the insertion of the cassette C2 come into contact with the protrusion members 9a and 9b. When the contact arms 2a and 2b come into contact with the protrusion members 9a and 9b, the contact arms 2a and 2b prevent movement of the inner cassette holder 1 in the manner as shown in Fig. 6. As would be clear from Figs. 5 and 6, the contact arm overruns the protrusion member when the cassette moves in the loading direction and is latched by the protrusion member when the cassette moves in the discharging direction like the ratchet mechanism. As a result, only the outer cassette holder 5 continues to travel to the cassette discharge position, and stops there. The inner cassette holder 1 is held at an intermediate position, changing its relative position to the outer cassette holder 5 as shown in Fig. 4.

The projection amount of the large cassette C2 from the front panel F is thus W2, which is substantially the same as W1, with the changed position of the inner cassette holder 1 relative to the outer cassette holder 5.

Subsequently, when the cassette C2 is removed from the inner cassette holder 1, the contact arms 2a and 2b return from the specific turned positions to their initial positions by the action of the springs 32, and the inner cassette holder 1 returns from the intermediate position to the original specific position, i.e., the position before insertion of the cassette by the effect of the tension of the springs 6a and 6b. When the cassette C1 or C2 is removed from the inner cassette holder 1, the inner cassette holder 1 always returns to its original specific position relative to the outer cassette holder 5 irrespective of the size of the cassette used. There is no problem in inserting a cassette when the next cassette to be inserted is either a small one or a large one, since the position of the inner cassette holder 1 is constant regardless of the size of the cassette previously used.

According to the first embodiment of the present invention, as described above, it is possible to achieve the substantially same projection amount of the cassette from the front panel F upon ejecting cassettes of different sizes, i.e., W1 for the small cassette C1 and W2 for the large cassette C2.

This solves the problems of the difficulty of removing the small cassette C1 due to an insufficient amount of projection, and the instability of the cassette C2 because of an excessively large amount of projection, and provides a cassette loading apparatus giving a high operability.

In this embodiment, W2 is made slightly larger than W1 to achieve a higher operability in manually taking out a cassette from the cassette loading device, by making the gripping area of the heavier large cassette C2 larger than that of the small cassette C1. However, the difference between W1 and W2 is in such a range that can be regarded as substantially the same from the practical point of view.

When there are no marked differences in size or weight between the two cassettes, or if required, W2 may be made equal to W1.

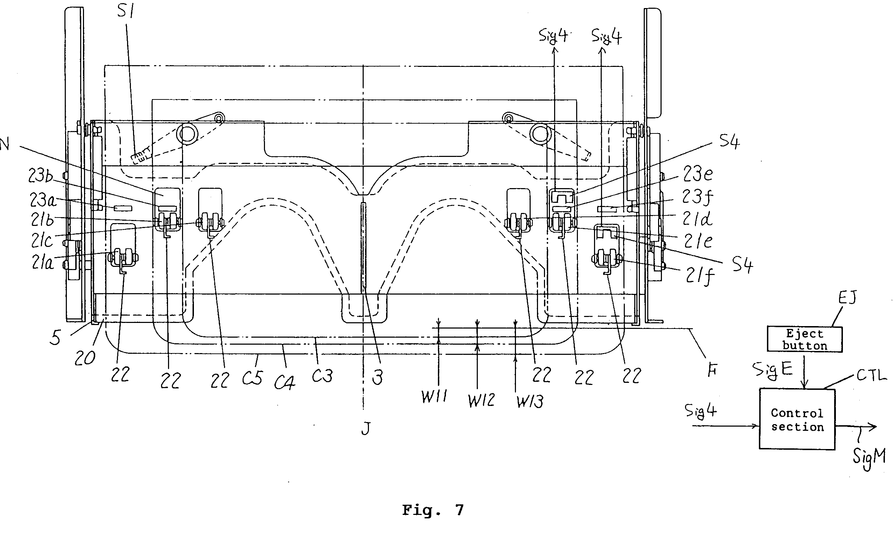

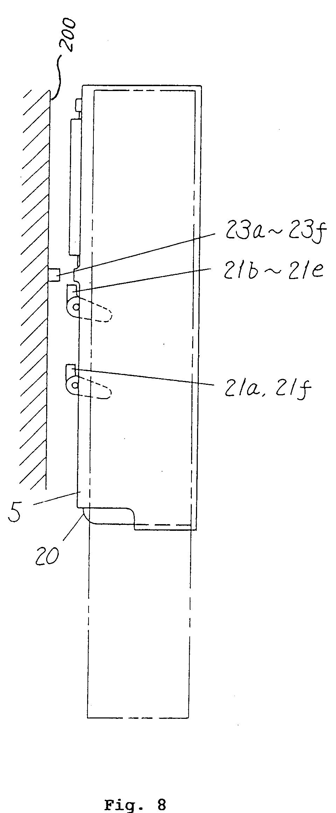

Next described will be a second embodiment of the present invention which permits selective use of three kinds of cassettes of different sizes with reference to Figs. 7 and 8. Fig. 7 is a plan view illustrating a cassette loading apparatus of the second embodiment of the present invention, and Fig. 8 is a side view thereof.

The construction of the second embodiment will be described below with reference to Figs. 7 and 8.

As shown in Figs. 7 and 8, six rectangular windows N and six turnable contact arms 21a to 21f urged with springs 22 are provided on an upper surface of an inner cassette holder 20, and are arranged symmetrically with respect to a center line J. A light shuttering type rotation detecting sensor S4 for identifying the kind of cassette is provided to cooperate with each of the contact arms 21e and 21f. Protrusion members 23a and 23f adapted to come into contact with the contact arms 21a and 21f and protrusion members 23b and 23e adapted to come into contact with the contact arms 21b and 21e are arranged on an upper wall 200 of the cassette loading apparatus.

A cassette insertion guide member 3 is provided at the center of the inner cassette holder 20. The cassette insertion guide member 3 guides insertion of a cassette so as to permit proper positioning of the cassette into the inner cassette holder 20. Cassette insertion detection levers 4a and 4b and a cassette insertion detecting sensor S1 for confirming proper insertion of the cassette into the inner cassette holder 20 are provided on the bottom plate of the inner cassette holder 20.

As the outer cassette holder 5 and the transport mechanism for transferring the outer cassette holder 5, are the same as those of the first embodiment, description of them is omitted here.

Operations in the second embodiment of the present invention having the construction as described above will be described below with reference to Figs. 7 and 8.

First, operations will be described in the case where the smallest cassette C3 is used among the three sizes of cassettes. When the cassette C3 is inserted into the inner cassette holder 20, the cassette C3 is guided by the cassette insertion guide member 3 and comes into contact with the contact arms 21c and 21d to turn them to be in a specific turned position. The rotation detecting sensors S4 detect no turn of the contact arms 21e and 21f and send detection signals Sig4 to the control section CTL, so that the control section CTL recognizes the selection of the smallest cassette C3. The contact arms 21c and 21d hold the cassette C3 under pressure against the inner cassette holder 20 by the action of springs 22.

When further pushing in the cassette C3 to be properly inserted into the inner cassette holder 20, the transport of the outer cassette holder 5 toward the cassette loading position begins. The outer cassette holder 5 moves to position the cassette C3 at the cassette loading position and holds it there. Thereafter, when the eject button EJ is pressed a signal SigE is sent to the control section CTL which controls the motor to transport the outer cassette holder 5, by means of the signal SigM, in the cassette discharge direction. During transfer of the outer cassette holder 5, absence of protrusion members in contact with the contact arms 21c and 21d allows the inner cassette holder 20 to be transported integrally with the outer cassette holder 5, while being held at a specific position relative to the outer cassette holder 5. The outer cassette holder 5 travels to the waiting position, i.e., the cassette discharge position and stops there.

The projection amount of the cassette C3 from the front panel F is therefore W11.

Now, operations when using a medium-size cassette C4 will be described below. When inserted, the medium-size cassette C4 is guided so as to come into contact with the four contact arms 21b to 21e located on the inner cassette holder 20, and the contact arms 21b to 21e are then held in the specific turned position. The rotation detecting sensors S4 detect the turn of the contact arm 21e and no turn of the contact arm 21f and send detection signals Sig4 to the control section CTL, which recognizes selection of the medium-size cassette C4. By the urging forces of the four contact arms 21b to 21e, the cassette C4 is held under pressure against the inner cassette holder 20 with a holding force larger than that in the case of the small cassette C3.

When the cassette C4 is properly inserted into the inner cassette holder 20, the transport of the inner cassette holder 20 integral with the outer cassette holder 5 toward the cassette loading position begins. As the transport of the outer cassette holder 5 continues, the contact arms 21b and 21e come into contact with the protrusion members 23b and 23e. As described for the first embodiment, however, the contact arms 21b and 21e pass over the protrusion members 23b and 23e by the turning motion as shown in Fig. 5, and the outer cassette holder 5 is transferred to the cassette discharge position and stops there.

When the eject button EJ is pressed the transport of the outer cassette holder 5 toward the cassette discharge position begins. Subsequently, the contact arms 21b and 21e being in the specific turned position by the insertion of the cassette C4 come into contact with the protrusion members 23b and 23e to prevent the movement of the inner cassette holder 20 as shown in Fig. 6, so that only the outer cassette holder 5 continues to travel. The outer cassette holder 5 is transported to the cassette discharge position and stops there.

When using the medium-size cassette C4, as described above, the projection amount of the cassette from the front panel F becomes W12 by changing the position of the inner cassette holder 20 relative to the outer cassette holder 5.

Now, operations in the case of cassette C5 the largest of the three sizes of cassettes are described below. When inserting the large cassette C5, it comes into contact with all the contact arms 21a to 21f arranged on the inner cassette holder 20, which are then held in the specific turned position. The rotating detecting sensors S4 detect the turn of both the contact arms 21e and 21f and send signals Sig4 to the control section CTL, which recognizes that the largest cassette C5 has been selected. By the urging forces of all the contact arms 21a to 21f, the cassette C5 is held under pressure against the inner cassette holder 20 with the largest holding force.

When the cassette C5 is properly inserted into the inner cassette holder 20, the inner cassette holder 20 and the outer cassette holder 5 are similarly integrally transported toward the cassette loading position. During transport, the contact arms 21a and 21f come into contact with the protrusion members 23a and 23f, and the contact arms 21b and 21e, with the protrusion members 23b and 23e. The contact arms 21a, 21f, 21b and 21e passover, by the motion as shown in Fig. 5, the protrusion members 23a, 23f, 23b and 23e, and the outer cassette holder 5 is transferred to the cassette loading position and stops there.

Upon ejecting, the contact arms 21a and 21f among the contact arms 21a to 21f having been turned by the insertion of the cassette C5 come into contact with the protrusion members 23a and 23f as shown in Fig. 6 to prevent the movement of the inner cassette holder 20. The outer cassette holder 5 is transferred to the cassette discharge position and stops there.

When using the large cassette C5, as described above, the projection amount of cassette becomes W13 from the front panel F by changing the position of the inner cassette holder 20 relative to the outer cassette holder 5 more than in the case of the medium-size cassette C4.

In this embodiment, the amounts of cassette projection are set as W11<W12<W13 with a view to achieving a high operability by enlarging the grip portion of the cassette to correspond to the weight of the cassette. There are therefore only slight differences between W11, W12 and W13 and they may be considered substantially the same.

According to the second embodiment of the present invention, as described above, the projection amount of the cassette from the front panel F after ejection can be made substantially the same for the three or more kinds of cassettes of different sizes, thus providing a cassette loading apparatus with a high operability. In addition, by simultaneously providing both the function to identify the kind of the cassette by means of the control section CTL by the use of the contact arms 21a to 21f and the function to obtain a cassette holding force corresponding to the size of the cassette, it is possible to obtain a cassette loading apparatus having many functions with a smaller number of parts.

While, in the second embodiment of the present invention, six contact arms 21a to 21f have been provided for the three kinds of cassettes, the number of contact arms may be two or more, and there is no limitation on this number. In other words, when there are n-kinds of selectively available cassettes, the number of contact arms may be n-1 or more.

In the construction of the above-mentioned embodiments, the contact arms 2a, 2b, 21a to 21f act as shown in Figs. 5 and 6, but these arms may have any other configuration or construction if movement of the inner cassette holder 1 or 20 during ejection can be prevented. In the embodiments, furthermore, the cassette loading apparatuses selectively applicable for two kinds and three kinds of cassettes, respectively, have been described. However, such a modification may be made that any number of sizes of cassettes can be used.

While the above description has chiefly been made in case of VTR, the present invention is applicable also for other cassette loading apparatuses using cassettes.

## Claims

1. A cassette loading apparatus for selectively loading any of a plurality of kinds of cassettes which have different sizes from one another into a specific loading position and unloading the loaded cassette, said apparatus comprising:
a first cassette holder for holding a cassette inserted thereinto;
a second cassette holder for holding said first cassette holder movably in cassette inserting and discharging directions, said second cassette holder being movable between a first position where a cassette is insertable into and removable from said first cassette holder and a second position where a cassette held in the inner cassette holder is in the specific loading position;
a drive means for driving said second cassette holder to move between said first and second positions;
a contact member provided on said first cassette holder for coming in contact with the cassette inserted into said first cassette holder when the cassette is a specific one of said plurality of kinds of cassettes;
a protrusion member adapted to come in contact with the contact member which is in contact with said specific cassette at a predetermined position of said second cassette holder on its way of movement in the cassette discharging direction from the second position to the first position to prevent a movement of said first cassette holder in the cassette discharging direction to thereby control a projection amount of the cassette from said apparatus when said second cassette holder reaches the first position.

2. A cassette loading apparatus according to claim 1, wherein said plurality of kinds of cassettes are two kinds of cassettes having different sizes from each other, and wherein said specific cassette coming in contact with said contact member is a larger one of said two kinds of cassettes.

3. A cassette loading apparatus according to claim 1, wherein said contact member is movable upon contacting the cassette inserted into said first cassette holder, and wherein said apparatus further comprises a detection means for detecting a movement of said contact member to thereby determine the kind of the cassette inserted into said first cassette.

4. A cassette loading apparatus according to claim 1, further comprising a means for pressing said contact member onto the cassette inserted into said first cassette holder to hold the cassette in said first cassette holder.

5. A cassette loading apparatus according to claim 1, wherein said plurality of kinds of cassettes are n kinds of cassettes having different sizes from one another, and wherein said apparatus has at least (n-1) contact members each being adapted to come in contact with one of (n-1) cassettes of the n kinds of cassettes, and a plurality of protrusion members each being adapted to come in contact with a corresponding contact member which is in contact with a cassette held in said first cassette holder at a predetermined position of said second cassette holder on its way of movement in the cassette discharging direction from the second position to the first position to prevent a movement of said first cassette holder in the cassette discharging direction to thereby control a projection amount of the cassette from said apparatus when said second cassette holder reaches the first position.
